Europäisches Patentamt

European Patent Office

Office européen des brevets

(19)

(11) Publication number: **0 244 109**
**B1**

(12) **EUROPEAN PATENT SPECIFICATION**

(45) Date of publication of the patent specification:
19.09.90

(51) Int. Cl.⁵: **C04B 30/02**

(21) Application number: 87303118.1

(22) Date of filing: 09.04.87

(54) Thermally bonded fibrous products.

(30) Priority: 29.04.86 US 857699

(43) Date of publication of application:
04.11.87 Bulletin 87/45

(45) Publication of the grant of the patent:
19.09.90 Bulletin 90/38

(84) Designated Contracting States:
DE ES FR GB IT

(56) References cited:
US-A- 4 148 962
US-A- 4 331 773

CHEMICAL ABSTRACTS, vol. 100, no. 24, 11th
June 1984, page 287, abstract no. 196542d, Columbus,
Ohio, US; & JP-A-59 13 674 (TOSHIBA CERAMICS CO.,
LTD) 24-01-1984

(73) Proprietor: THERMAL CERAMICS, INC., P.O.
Box 923 Old Savannah Road, Augusta,
Georgia 30903-0923(US)

(72) Inventor: Hill, Charles Alexander, 1412 Tilden Avenue,
Lynchburg VA 24504(US)

(74) Representative: Boff, James Charles et al, c/o Phillips &
Leigh 7 Staple Inn Holborn, London WC1V 7QF(GB)

## Description

This invention relates to thermally bonded fibrous products.

Ceramic fibres are often used to provide thermal insulation from very high temperatures. For many applications, it is convenient and often necessary to form the fibres into rigid shapes such as boards or special configurations. Two approaches are used to accomplish bonding of ceramic fibres to obtain these shapes. Chemical bonding is the most common. A heat or air setting binder, usually in liquid form, is added to the fibres and, through drying, the application of low to moderate heat, or chemical reaction, the binder becomes rigid and literally glues the fibres into a rigid structure. Such binders include colloidal oxide suspensions, silicate solutions and thermoplastic suspensions. The strenghts of these systems are relatively low, typically having flexural strength properties of 138 to 345 kPa (20 to 50 lbf/in²) or "psi". More binder can be added to increase the strength. However, the additional binder adversely affects thermal insulating properties.

A second family of rigid ceramic shapes has been developed that utilises more expensive firing schedules to sinter or fuse the fibres into a rigid structure. Flexural strengths are 10 to 20 times that of chemical bonding at the same density with no sacrifice in insulating properties. Difficulties in matching thermal expansion and preventing destructive crystal growth in the fibres have been experienced. Some success has been reportedly achieved through the use of a blend of silica fibres and aluminoborosilicate fibres. This technology still depends on the use of very expensive, high purity fibres and teaches against the use of lower grade fibres or lower grade particulates.

According to one aspect of the invention, a thermally bonded fibrous product is provided from compositions comprising a sintered blend of aluminosilicate fibres, silica powder, rather than silica fibre, and boron nitride powder.

Thermally bonded fibrous products in accordance with the invention advantageously provide inexpensive constructions of high thermal insulating value with improved strength at relatively low densities.

Preferably, the components of the product, on a weight basis, consist essentially of 75% aluminosilicate fibre, 20% silica powder (-325 mesh: US standard mesh size) and 5% boron nitride powder (-325 mesh: US standard mesh size) sintered by firing at a temperature of at least 1288°C (2350°F). The use of silica powder, rather than silica fibres, as a bond former, is unique in that conventional thermal bonding theory teaches the use of silica fibre as a bonding agent.

The invention will now be further described by way of illustrative and non-limiting example.

Examples of the invention disclosed hereinbelow describe the construction or formation of thermally bonded fibrous products, comprising a sintered blend of primarily aluminosilicate fibres, silica powder and boron nitride powder, that are low in cost, and have high strength, low density and high thermal insulating value with improved machineability. The aluminosilicate thermally bonded fibrous products are particularly suited for use as diesel soot filters, kiln furniture, combustor liners and burner tubes, and in other high temperature applications.

Suitable fibres for the practice of this invention may consist essentially of approximately equal parts of alumina and silica, such as KAOWOOL (trade mark) brand ceramic fibre marketed by The Babcock & Wilcox Company. The aluminosilicate fibres have average diameters of about 3 micrometres (microns).

Particulates that can be employed in the formation of aluminosilica products embodying the invention include -325 mesh (US standard mesh size) silica powder and smaller amounts of -325 mesh (US standard mesh size) boron nitride powder. Suitable silica powders include high purity quartz silica powder (-325 mesh: US standard mesh size), as is available from Atlantic Equipment Engineers, and high purity amorphous fumed silica (12 nm or millimicrons), marketed under the trade mark AEROSIL 200 by Degussa. Boron nitride powder marketed as UCAR HCV by Union Carbide has been found to provide a suitable boron nitride.

The following examples are illustrative and explanatory of the invention and not restrictive thereof.

A number of billets measuring 216 mm (8.5 inches) square and 38 mm (1.5 inches) thick were prepared from compositions of aluminosilicate fibre, silica powder and boron nitride powder which were first added to deionised water.

Starting materials included a first system having, by weight, 76.2% aluminosilicate fibre, 19% silica powder and 4.8% boron nitride powder, and a second system having, by weight, 89.5% aluminosilicate fibre, 7.2% amphorous fumed silica powder and 3.3% boron nitride powder. The solution was mixed in a high shear Arde Barinco CJ-4 laboratory mixer for a sufficient time to disperse the solids within the solution. The aluminosilicate fibre was then added and the modified solution was further mixed for a sufficient time to disperse the fibre component in the solution. After dispersion, a small amount of Betz 1260 polymer was added to flocculate the solution.

Billets were formed from the flocculated fibre/powder slurry in a casting/pressing tower. The tower had a top and bottom platen, each platen being constructed such that a vaccum could be applied and liquid removed through the platen. After the slurry was added, it was allowed to free-drain. The resultant pad was then pressed by movement of the bottom platen to a desired thickness. During the pressing operation, a vacuum was applied to the top and bottom platen.

The pad was oven dried, at approximately 121°C (250°F), until thoroughly dry. The dried parts were then fired in an electric furnace, at a heat-up rate of about 220°C/h (400°F/h) and held at the sintering temperature for 90 minutes. The aluminosilicate fibre-silica powder-boron nitride composition was then fired at 1288°C (2350°F), and the aluminosilicate-fumed silica-boron nitride was fired at 1371°C (2500°F).

Room temperature modulus of rupture (MOR) and density were determined in the as-fired condition, and after reheats to 982°C (1800°F), 1149°C (2100°F) and 1316°C (2400°F). Table I (below) reflects the values of these properties for sample billets formed from the first system composition while Table II (below) reflects the values of these properties for sample billets formed from the second system composition.

The billets displayed no shrinkage at the reheat temperatures of 982°C (1800°F) and 1149°C (2100°F). At the reheat temperature of 1316°C (2400°F), sample billets of the first system composition experienced less than 7% volumetric shrinkage and sample billets of the second system composition experienced less than 2% volumetric shrinkage.

Analysis has indicated that boron nitride is released upon firing above the temperature of 649°C (1200°F) and fluxes the silica powder to form a fused bond at the fibre intersections, thereby producing an extremely strong shape. In addition, the boron nitride aids in stabilisation of the fused bond against crystallisation. When blends in the desired portions, by weight, of approximately 75% aluminosilicate fibre are formed and fired, a very strong, lightweight insulation results.

### Table I - -325 Mesh (US standard mesh size) Silica Powder

| | As Fired | Reheat | | |
| --- | --- | --- | --- | --- |
| | | After 8 hours at 982°C (1800°F) | After 48 hours at 1149°C (2100°F) | After 8 hours at 1316°C (2400°F) |
| MOR-kPa | 5929 | 5550 | 5654 | 7067 |
| $(kgf/cm^2)$ | (60.4) | (56.6) | (57.6) | (72.0) |
| $(lbf/in^2)$ | (860) | (805) | (820) | (1025) |
| DENSITY $kg/m^3$ | 496.6 | 496.6 | 464.6 | 496.6 |
| $(lb/ft^3)$ | (31) | (31) | (29) | (31) |
| MOR/DENSITY $kPa/(kg/m^3)$ | 11.94 | 11.18 | 12.17 | 14.23 |
| $((kgf/cm^2)/(kg/m^3))$ | (0.122) | (0.114) | (0.124) | (0.145) |
| $((lbf/in^2)/(lb/ft^3))$ | (28) | (26) | (28) | (33) |
| FIRING TEMP. °C | 1454 | 1454 | 1288 | 1288 |
| (°F) | (2650) | (2650) | (2350) | (2350) |

3

EP 0 244 109 B1

## Table II - Fumed Silica Powder

| | As Fired | Reheat | |
|---|---|---|---|
| | | After 48 hours at $1149^{o}C$ $(2100^{o}F)$ | After 8 hours at $1316^{o}C$ $(2400^{o}F)$ |
| MOR-kPa | 2620 | 2965 | 3172 |
| $(kgf/cm^2)$ | (26.7) | (30.2) | (32.3) |
| $(lbf/in^2)$ | (380) | (430) | (460) |
| DENSITY | | | |
| $kg/m^3$ | 400.5 | 432.5 | 432.5 |
| $(lb/ft^3)$ | (25) | (27) | (27) |
| MOR/DENSITY | | | |
| $kPa/(kg/m^3)$ | 6.54 | 6.86 | 7.33 |
| $((kgf/cm^2)/(kg/m^3))$ | (0.067) | (0.070) . | (0.075) |
| $((lbf/in^2)/lb/ft^3))$ | (15) | (16) | (17) |
| FIRING TEMP. | | | |
| $^{o}C$ | 1371 | 1371 | 1371 |
| $(^{o}F)$ | (2500) | (2500) | (2500) |

## Claims

1. A thermally bonded fibrous product having high thermal insulating value, high modulus of rupture and low density, the product comprising a blend of aluminosilicate fibres, silica powder and boron nitride powder formed by sintering at a temperature of at least 1288°C (2350°F).

2. A thermally bonded fibrous product according to claim 1, wherein said blend, by weight, consists essentially of 75% to 90% aluminosilicate fibre, 7% to 20% silica powder and 3% to 5% boron nitride powder.

3. A thermally bonded fibrous product according to claim 2, wherein said blend, by weight, consists essentially of 76.2% aluminosilicate fibre, 19% silica powder and 4.8% boron nitride powder.

4. A thermally bonded fibrous product according to claim 2, wherein said blend, by weight, consists essentially of 89.5% aluminosilicate fibre, 7.2% amorphous fumed silica, and 3.3% boron nitride powder.

5. A thermally bonded fibrous product according to claim 4, wherein the sintering temperature is 1371°C (2500°F).

6. A thermally bonded fibrous product according to any one of the preceding claims, wherein the silica powder consists essentially of -325 mesh (US standard mesh size) silica powder and the boron nitride powder consists essentially of -325 mesh (US standard mesh size) boron nitride powder.

4

7. A thermally bonded fibrous product according to any one of the preceding claims, wherein the silica powder consists essentially of 12 nm amorphous fumed silica.

**Patentansprüche**

1. Thermisch gebundenes faseriges Produkt mit hohem thermischen Isolationswert, hohem Bruchmodul und geringer Dichte, wobei das Produkt ein Gemisch aus Alumosilikatfasern, Siliciumdioxidpulver und Bornitridpulver umfaßt, das durch Sintern bei einer Temperatur von mindestens 1288°C (2350°F) gebildet wurde.

2. Thermisch gebundenes faseriges Produkt nach Anspruch 1, wobei das Gemisch, bezogen auf das Gewicht, im wesentlichen aus 75% bis 90% Alumosilikatfasern, 7% bis 20% Siliciumdioxidpulver und 3% bis 5% Bornitridpulver besteht.

3. Thermisch gebundenes faseriges Produkt nach Anspruch 2, wobei die Mischung, bezogen auf das Gewicht, im wesentlichen aus 76,2% Alumosilikatfasern, 19% Siliciumdioxidpulver und 4,8% Bornitridpulver besteht.

4. Thermisch gebundenes faseriges Produkt nach Anspruch 2, wobei die Mischung, bezogen auf das Gewicht, im wesentlichen aus 89,5% Alumosilikatfasern, 7,2% amorphem, "fumed" Siliciumdioxidpulver und 3,3% Bornitridpulver besteht.

5. Thermisch gebundenes faseriges Produkt nach Anspruch 4, wobei die Sintertemperatur 1371°C (2500°F) beträgt.

6. Thermisch gebundenes faseriges Produkt nach einem der vorhergehenden Ansprüche, wobei das Siliciumdioxidpulver im wesentlichen aus – 325 mesh (US Standard Maschengröße) Siliciumdioxidpulver und das Bornitridpulver im wesentlichen aus – 325 mesh (US Standard Maschengröße) Bornitridpulver besteht.

7. Thermisch gebundenes faseriges Produkt nach einem der vorhergehenden Ansprüche, wobei das Siliciumdioxidpulver im wesentlichen aus amorphem, 12 nm "fumed" Siliciumdioxid besteht.

**Revendications**

1. Produit fibreux lié thermiquement, ayant une caractéristique d'isolation thermique élevée, un module de rupture élevé et une faible densité, ce produit comprenant un mélange de fibres d'aluminosilicate, de poudre de silice et de poudre de nitrure de bore formé par frittage à une température d'au moins 1288°C.

2. Produit fibreux lié thermiquement selon la revendication 1, dans lequel le mélange, en poids, contient essentiellement 75 à 90% de fibres d'aluminosilicate, 7 à 20% de poudre de silice et 3 à 5% de poudre de nitrure de bore.

3. Produit fibreux lié thermiquement selon la revendication 2, dans lequel le mélange contient, en poids, essentiellement 76,2% de fibres d'aluminosilicate, 19% de poudre de silice et 4,8% de poudre de nitrure de bore.

4. Produit fibreux lié thermiquement selon la revendication 2, dans lequel le mélange contient, en poids, essentiellement 89,5% de fibres d'aluminosilicate, 7,2% de silice fumée amorphe et 3,3% de poudre de nitrure de bore.

5. Produit fibreux lié thermiquement selon la revendication 4, dans lequel la température de frittage est 1371°C (2500°F).

6. Produit fibreux lié thermiquement selon l'une quelconque des revendications précédentes, dans lequel la poudre de silice contient essentiellement de la poudre de silice à dimensions de particules inférieures à 45 µm (US standard : 325 mesh) et la poudre de nitrure de bore contient essentiellement de la poudre de nitrure de bore à dimensions de particules inférieures à 45 µm (US standard : 325 mesh).

7. Produit fibreux lié thermiquement selon l'une quelconque des revendications précédentes, dans lequel la poudre de silice contient essentiellement de la silice fumée amorphe à dimensions de particules 12 nm.